# EUROPEAN PATENT SPECIFICATION

(11) **EP 2 774 711 B1**
(45) Date of publication and mention of the grant of the patent: **18.11.2015**
(21) Application number: 14000749.3
(22) Date of filing: 03.03.2014
(51) Int. Cl.: B23K 9/18, B23K 10/02, B23K 37/04, B23K 37/047, F01D 5/00, B23K 37/053, F01D 5/06, B23K 9/028

(54) **Supporting machine for welding rotor parts, welding machine with such supporting machine and method of supporting rotor parts during welding using such welding machine**
Unterstützung-Maschine zum Schweißen von Rotorteilen, Schweißvorrichtung mit solcher Unterstützung-Maschine, und Verfahren zur Unterstützung von Rotorteilen während Schweissen unter Verwendung einer solchen Schweißvorrichtung
Dispositif pour soutenir des pièces de rotor durant le soudage de ces pièces, machine comprenant un tel dispositif, et procédé de soutien de pièces de rotor durant le soudage utilisant une telle machine

(30) Priority: 05.03.2013 CZ 20130166; 05.03.2013 CZ 201327647 U
(43) Date of publication of application: 10.09.2014
(73) Proprietor: Siemens S.r.o., 155 00 Prague (CZ); Vysoké Ucení Technické V Brne, 601 90 Brno (CZ)
(72) Inventor: Barak, Martin, 621 00 Brno (CZ); Beran, David, 583 01 Havlíckuv Brod (CZ); Danek, Ladislav, 621 00 Brno (CZ); Julis, Martin, 674 01 Trebic (CZ); Kucera, Drahoslav, 664 61 Rajhrad (CZ); Podrábský, Tomás, 602 00 Brno (CZ); Topic, Pavel, 628 00 Brno (CZ)
(74) Representative: Plicka, Josef

(56) References cited:
- JP-A- H1 133 782
- US-A- 3 480 158
- US-A- 3 864 812
- US-A- 4 628 575
- US-A1- 2012 187 093

## Description

The invention relates to a supporting machine for supporting a first rotor part and at least one second rotor part of a rotor, in particular a hollow rotor, according to the preamble of claim 1 (see, for example, US 4 628 575 A), in a horizontal position during welding the parts together by a welding machine. Further the invention relates to a welding machine for welding a first rotor part and at least a second rotor part of a rotor, in particular a hollow rotor (see claim 5) and to a method of supporting a first rotor part and at least a second rotor part of a rotor, in particular a hollow rotor, during the welding of the parts by such welding machine (see claim 8).

Turbine and generator rotors undergo high stresses and, from a safety aspect, are the most significant components of a turbine generator system. Depending on the appropriate operating temperatures, the rotors (shafts) can be fabricated out of low/high alloy heat resistance material or of low alloyed, highly toughened material for low pressure application.

The rotors can have a length of up to 12m or more. Further such rotors, even hollow rotors, can have a weight of up to 40.000kg or more. Thus it is necessary to weld two or more rotors parts together to build the rotor of such a turbine generator system.

One problem is that the big and heavy rotor parts have to be aligned to each other for creating a good welding connection of the rotor parts. It is possible to fix two rotor parts next to each other, so that the end faces of the rotor parts contact each other. After that a welding machine is moved around the joint connection for welding the rotor parts together. To do this the rotor parts are orientated in a vertical orientation, so that,the welding machine can easily be moved around the rotor parts.

It is an object of the present invention to solve aforesaid problems of welding at least to rotors parts together at least partly. In particular, it is an object of the present invention to provide a supporting machine, a welding machine and a method for supporting rotor parts during welding, which overcomes the disadvantages of the afore-mentioned welding of rotor parts, in particular which enable a simple and good welding connection between the rotor parts.

Aforesaid objects are solved by a supporting machine according to independent claim 1, a welding machine according to claims 5 and a method of supporting a first rotor part and at least a second rotor part of a rotor during the welding of the parts by a welding machine according to claim 7. Further features and details of the present invention result from the sub claims, the description and the drawings. Features and details discussed with respect to the supporting machine can also be applied to the welding machine and the method, and vice versa.

According to a first aspect of the invention the aforesaid object is solved by a supporting machine for supporting a first rotor part and at least one second rotor part of a rotor, in particular a hollow rotor, in a horizontal position during welding the parts together by a welding machine. The supporting machine is comprising at least one motorized roller for supporting the first rotor part and at least one motorized roller for supporting the at least one second rotor part, wherein the rotation of the at least one motorized roller of the first rotor part is aligned in such a way to the rotation of the at least one motorized roller of the at least one second rotor part that the rotor parts rotate with the same rotation speed. That means the motorized roller make a synchronized rotation of the rotor parts. Because of the synchronized rotation of the rotor parts it is possible to weld both rotor parts together. Advantageously the rotor parts are in horizontal position during the welding procedure. Because of the support of the motorized roller the rotor parts keep their height during the welding procedure. Such a supporting machine enables that the welding of the at least two rotor parts can be done by a stationary welding machine, because the rotor parts are being rotated with the same rotation velocity. Each rotor part can be supported and be rotated by one motorized roller. But it is possible that two or more rollers support and rotate one rotor part. For example, a large rotor parts with a length of more than 4m can be supported and rotated by two or more motorized rollers.

The rotor parts are preferably hollow/tubular rotor parts. The hollow rotor parts can have a thickness of 250-300mm. Such rotor parts can be welded together by a plasma welding machine. The rotor parts are advantageously preheated. The rotor part temperature during the welding is advantageously up to 450°C.

Preferred is a supporting machine which comprises at least one free-rotation roller for additionally supporting the rotor parts. In particular a preferred supporting machine comprises at least one additional free-rotation roller for each rotor part. All rotor parts are set on rollers. Advantageously one rotor part is supported by one motorized roller and one or more free-rotation roller. All rollers together enables that the roller parts are being set-up in a horizontal position in which a fast and relative easy welding can be done.

According to a preferred development of the present invention a supporting machine can comprise a fixed tip for rotatable holding the free end of the second rotor part, whereby the fixed tip has an AC/DC ground connection. The fixed tip restricts the movement of the rotor parts in a first direction along the longitudinal axis of the rotor parts. The supporting machine according to comprises additionally a hydraulic press tip for rotatable holding the free end of the first rotor part and pressing the first rotor part against the at least one second rotor part, whereby the hydraulic press tip has a AC/DC ground connection. That means the rotor parts can be pressed against each other. The fixed tip restricts the horizontal movement in one direction. The hydraulic press tip ensures that the movement of the rotor parts is restricted in the other horizontal direction, as well. The hydraulic press tip makes sure that the rotor parts are pressed with a certain force against each other and therefore supports the welding. The AC/DC ground connection enables plasma welding of the rotor parts.

According to another preferred development of the invention a supporting machine can be provided which is characterized in that the supporting machine is constructed to carry rotor parts up to 40.000kg.

Further according to a second aspect of the invention the object is solved by a welding machine for welding a first rotor part and at least a second rotor part of a rotor, in particular a hollow rotor, comprising a machine body, arranged at the machine body a stationary welding unit and a supporting machine for supporting the rotor parts during welding, whereby the supporting machine is designed according the first aspect of the invention, in particular according to one of the claims 1 to 4.

Such a welding machine enables an easy and good welding of the at least to rotor parts. The welding of the rotor parts can be done in a horizontal position of the rotor parts. Because of the rollers of the supporting machine the rotor elements can be easily aligned. Because of the good alignment of the rotor parts to each other at very uniform welding can be done to fix the rotor parts together.

Therefore a welding machine is preferred which is characterized in that the stationary welding unit comprises a plasma welding unit and/or a submerged arc welding unit. Preferred is a welding machine with both a plasma welding unit and a submerged arc welding unit. The welding units are arranged and constructed in such a way that the weld root, including the weld lock, can be plasma welded and the rest of the narrow gap can be filled by submerged arc welding. Such a welding machine enables a welding in a narrow and deep gap with specified weld lock.

According to a third aspect of the invention the object is solved by a method of supporting a first rotor part and at least a second rotor part of a rotor, in particular a hollow rotor, during the welding of the parts by a welding machine according to the second aspect of the invention, according to one of the claims 5 or 6, wherein the method is characterized by following steps:
a) a first rotor part and at least one second rotor part are placed on the rollers of the supporting machine according to the first aspect of the invention,
b) the motorized rollers rotate the rotor parts synchronous during welding the rotor parts together.

The velocity of the rotation of the rotor parts can be controlled by the motorized rollers. The additional free-rotation rollers ensure that the rotor parts a rotatable fixed in a horizontal position. After positioning the rotor parts on the rollers and a restriction of the at least one second rotor part at the fixed tip, the free end of the first rotor part is arranged at the hydraulic press tip, which presses the rotor parts against each other during the welding procedure.

In particular a method is preferred comprising following steps:
a) Prior to placing the rotor parts in the supporting machine, set the free-rotation rollers in the positions of future welds of the turbine rotor (The position of the individual free-rotation rollers must be strictly in a vertical plane and an alignment of the rotor parts must be ensured by adjusting the rollers span),
b) Fix consoles and the motorized rollers to a supporting frame of the supporting machine (At least two rotor parts with identical heat treatment can be welded in one technological step on the condition that the outer diameter of machined parts in the area of welds under the roller must have the same size and the positioning lock cannot have clearance in any contact surfaces),
c) Place the rotor parts (12, 13, 14) on the rollers (1, 2, 3, 4) along the weld axis with a clearance of 1 - 20 mm and check their parallel alignment,
d) In case of a positive result of the check, set the hydraulic press tip (6) in axial and radial direction,
e) During slow rotation of the rotor parts (12, 13, 14) by the motorized rollers (1, 3), the clearance is set to zero using axial force, with insertion into the lock,
f) Check the general geometry of welded parts and position of rollers (1, 2, 3, 4),
g) Prepare thermally insulating covers, grounding, deflection measurement and tools,
h) Gradual heating during rotor parts (12, 13, 14) rotation with controlled correction in axial and radial position of the rollers (1, 2, 3, 4) and rotor parts (12, 13, 14) as well,
i) Check the temperature of the pre-heated zone based on the types of materials being welded,
j) Fill inner cavities of the rotor parts (12, 13, 14) with inert gas,
k) Set a plasma head position, welding parameters (RPM, I;U),
l) weld the root by a plasma arc welding (PAW) method, in particular by a keyhole technique,
m) Check the temperature and adjust it to the preheating temperature for a submerged arc welding (SAW) method,
n) Install a covering element, in particular a fire-resistant twine, in the welding gap in order to avoid penetration of slag into the area between the rotor parts (12, 13, 14) and the rollers (1, 2, 3, 4),
o) Set a weld SAW nozzle into the welding position, set shields and SAW welding parameters,
p) Gradually weld the individual layers into a self-supporting condition and then release the free-rotation rollers (2, 4),
q) Move the free-rotation rollers (2, 4) in area outside the weld and finish the welds in the cover layers.

The present invention is further described with respect to the accompanying figures. The figures show schematically:
- Fig. 1: three rotor parts of a rotor aligned to each other on an inventive supporting machine,
- Fig. 2: a section through the welding area of the second and the third rotor parts according the rotor of fig. 1.

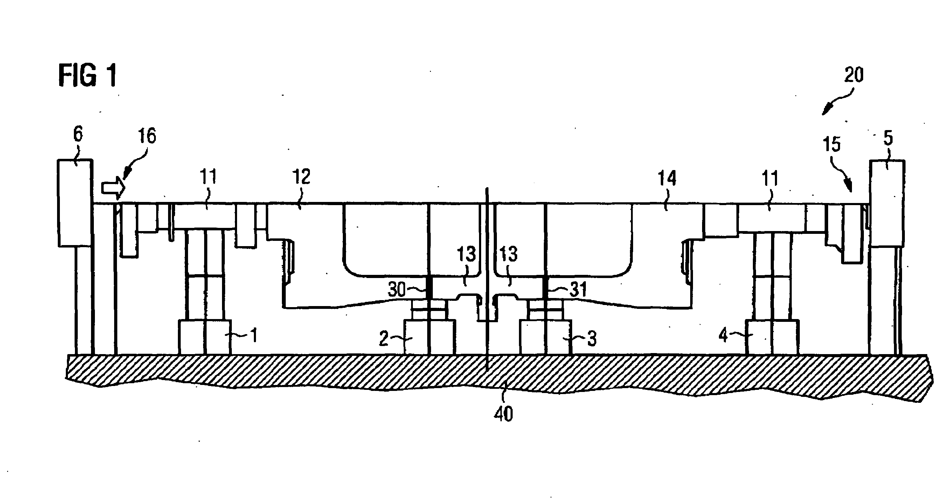

Fig. 1 shows schematically three rotor parts 12, 13, 14 of a rotor 11 with are aligned to each other on an inventive supporting machine 20. The supporting machine 20 comprises two motorized rollers 1, 3 and two free-rotation rollers 2, 4. The first rotor part 12 is supported by a first motorized roller 1 and the first free-rotation roller 2. Thus, the first rotor part 12 can be rotated by the first motorized roller 1. The second rotor part 13 is supported by the first free-rotation roller 2, as well, and additionally by the second motorized roller 3. The second rotor part 13 can be rotated by the second motorized roller 3, The third rotor part 14 is supported by the second free-rotation roller 4 and the second motorized roller 3, too. The second motorized roller 3 enables a synchronized rotation of the second and the third rotor parts 13, 14 with the first rotor part 12.

The fixed tip 5 holds the free end 15 of the second rotor part 14, whereby the second rotor part 14 can rotate around its longitudinal axis. Thus the fixed tip 5 restricts a horizontal movement of the rotor parts 12, 13, 14 in a first horizontal direction. The hydraulic press tip 6 rotatable holds the free end 16 of the first rotor part 12 and presses the first rotor part 12 against the two second rotor parts 13, 14 during welding the rotor parts 12 and 13 and the rotor parts 13 and 14 together. The supporting machine 20 enables that for the welding a stationary welding machine can be used. The motorized rollers 1, 3 rotate the rotor parts 12, 13 and 14 with the same rotation velocity, so that a good and even welding can be performed. The welding machine preferably comprises a plasma welding unit. Additionally or alternative to the plasma welding unit a submerged arc welding unit can be part of the welding machine. Both the fixed tip 5 and the hydraulic press tip 6 have an AC/DC ground connection for using the plasma welding unit. The supporting machine 20 is located on the ground 40.

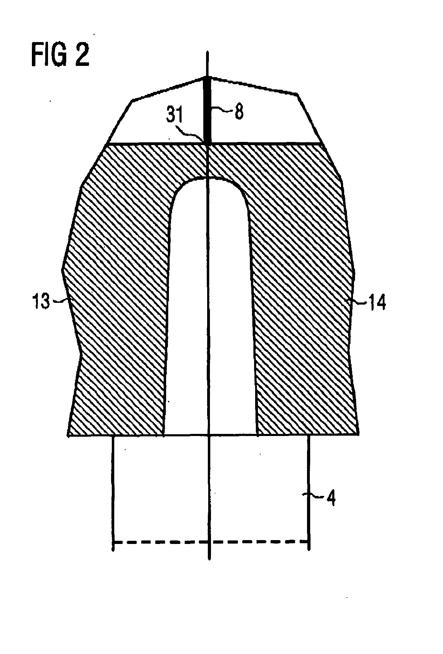

Fig. 2 shows schematically a section of the welding area 31 between the first second rotor part 13 and the second second rotor part 14. Both rotor parts 13, 14 are supported by the motorized roller 3. That means the motorized roller 3 enables a synchronized rotation of the rotors parts 13, 14.

## Claims

1. Supporting machine (20) for supporting a first rotor part (12) and at least one second rotor part (13, 14) of a rotor (11), in particular a hollow rotor, in a horizontal position during welding the parts (12, 13, 14) together by a welding machine, **characterized by** comprising at least one motorized roller (1) for supporting the first rotor part (12) and at least one motorized roller (3) for supporting the at least one second rotor part (13, 14), wherein the rotation of the at least one motorized roller (1) of the first rotor part (12) is aligned in such a way to the rotation of the at least one motorized roller (3) of the at least one second rotor part (13) that the rotor parts (12, 13, 14) rotate with the same rotation speed, and further **characterized in that** the supporting machine (20) comprises a hydraulic press tip (6) for rotatable holding the free end (16) of the first rotor part (12) and pressing the first rotor part (12) against the at least one second rotor part (13, 14), whereby the hydraulic press tip (6) has an AC/DC ground connection.

2. Supporting machine (20) according to claim 1, **characterized in that** supporting machine (20) comprises at least one free-rotation roller (2, 4) for additionally supporting the rotor parts (12, 13).

3. Supporting machine (20) according to claim 1 or 2, **characterized in that** the supporting machine (20) comprises a fixed tip (5) for rotatable holding the free end (15) of the second rotor part (13, 14), whereby the fixed tip (5) has a AC/DC ground connection.

4. Supporting machine (20) according to any of the preceding claims, **characterized in that** the supporting machine (20) is constructed to carry rotor parts (12, 13, 14) up to 40.000kg.

5. welding machine for welding a first rotor part (12) and at least a second rotor part (13, 14) of a rotor (11), in particular a hollow rotor, comprising a machine body (7), arranged at the machine body a stationary welding unit and a supporting machine for supporting the rotor parts (12, 13, 14) during welding, **characterized in that** the supporting machine (20) is designed according to one of the preceding claims.

6. Welding machine according to any of the preceding claims, **characterized in that** the stationary welding unit comprises a plasma welding unit and/or a submerged arc welding unit.

7. Method of supporting a first rotor part (12) and at least one second rotor part (13, 14) of a rotor (11), in particular a hollow rotor, during the welding of the parts (12, 13, 14) by a welding machine according to claim 5 or 6, wherein the method is **characterized by** following steps:
a) a first rotor part (12) and at least one second rotor part (13, 14) are placed on the rollers (1, 2, 3, 4) of the supporting machine (20) according to one of the claims 1 to 4,
b) the motorized rollers (1, 3) rotate the rotor parts (12, 13, 14) synchronous during welding the rotor parts (12, 13, 14) together.

8. Method according to claim 7, **characterized by** following steps:
a) Set the free-rotation rollers (2, 4) in the positions of future welds of the turbine rotor in such a way that the position of the rollers (2, 4) is in a vertical plane and an alignment of the rotor parts (12, 13, 14) is ensured by adjusting the rollers (2, 4) span,
b) Fix consoles and the motorized rollers (1, 3) to a supporting frame of the supporting machine (20),

## Patentansprüche

1. Abstützmaschine (20) zum Abstützen eines ersten Rotorabschnitts (12) und mindestens eines zweiten Rotorabschnitts (13, 14) eines Rotors (11), insbesondere eines Hohlrotors, in einer waagerechten Lage während eines Schweißens von Teilen (12, 13, 14) miteinander mittels einer Schweißmaschine, **dadurch gekennzeichnet, dass** sie mindestens eine motorisierte Rolle (1) zum Abstützen des ersten Rotorabschnitts (12) und mindestens eine motorisierte Rolle (3) zum Abstützen des mindestens einen zweiten Rotorabschnitts (13, 14) aufweist, wobei das Drehen der mindestens einen motorisierten Rolle (1) des ersten Rotorabschnitts (12) mit dem Drehen der mindestens einen motorisierten Rolle (3) des mindestens einen zweiten Rotorabschnitts (13) derart ausgeglichen wird, dass die Teile (12, 13, 14) des Rotors mit gleicher Drehgeschwindigkeit gedreht werden, und ferner **dadurch gekennzeichnet, dass** die Abstützmaschine (20) eine hydraulische Pressspitze (6) für ein drehendes Halten eines freien Endes (16) des ersten Rotorabschnitts (12) sowie ein Drücken des einen ersten Rotorabschnitts (12) gegen den mindestens einen zweiten Rotorabschnitt (13,14) aufweist, wobei die hydraulische Pressspitze (6) einen AC/DC Massenanschluss aufweist.

2. Abstützmaschine (20) nach Anspruch 1, **dadurch gekennzeichnet, dass** die Abstützmaschine (20) mindestens eine freilaufende Rolle (2, 4) zu einem zusätzlichen Abstützen der Rotorabschnitte (12, 13) aufweist.

3. Abstützmaschine (20) nach Anspruch 1 oder 2, **dadurch gekennzeichnet, dass** die Abstützmaschine (20) eine feste Spitze (5) für ein drehendes Halten des freien Endes (15) des zweiten Rotorabschnitts (13, 14) aufweist, wobei die feste Spitze (5) einen AC/DC Massenanschluss aufweist.

4. Abstützmaschine (20) nach einem der vorhergehenden Ansprüche, **dadurch gekennzeichnet, dass** die Abstützmaschine (20) zum Tragen der Rotorabschnitte (12, 13, 14) bis zu 40.000 kg konstruiert ist.

5. Schweißmaschine zum Schweißen eines ersten Rotorabschnitts (12) und mindestens eines zweiten Rotorabschnitts (13, 14) eines Rotors (11), insbesondere eines Hohlrotors, enthaltend einen Maschinenkörper (7), eine auf dem Maschinenkörper angeordnete stationäre Schweißeinheit und eine Abstützmaschine (20) zum Abstützen der Rotorabschnitte (12, 13, 14) während der Schweißung, **dadurch gekennzeichnet, dass** die Abstützmaschine (20) nach einem der vorhergehenden Ansprüche ausgeführt ist.

6. Schweißmaschine nach einem der vorhergehenden Ansprüche, **dadurch gekennzeichnet, dass** die stationäre Schweißeinheit ein Plasma-Schweißgerät und/oder ein versunkenes Lichtbogenschweißgerät umfasst.

7. Verfahren zum Abstützen eines ersten Rotorabschnitts (12) und mindestens eines zweiten Rotorabschnitts (13, 14) eines Rotors (11), insbesondere eines Hohlrotors, während eines Schweißens von Teilen (12, 13, 14) miteinander mittels einer Schweißmaschine nach Anspruch 5 oder 6, wobei das Verfahren durch folgende Schritte gekennzeichnet ist:
a) ein erster Rotorabschnitt (12) und mindestens ein zweiter Rotorabschnitt (13, 14) auf Rollen (1, 2, 3, 4) der Abstützmaschine (20) nach einer der Ansprüche 1 bis 4 aufgelegt werden,
b) die motorisierten Rollen (1, 3) drehen die Rotorabschnitte (12, 13, 14) auf synchrone Weise während eines Schweißens von Teilen (12, 13, 14) miteinander.

8. Verfahren nach Anspruch 7, **gekennzeichnet durch** folgende Schritte:
a) Einstellen der freilaufenden Rollen (2, 4) in die Positionen von künftigen Schweißungen eines Turbinenrotors, derart, dass die Position der freilaufenden Rollen (2, 4) in eine vertikale Ebene und eine Ausrichtung der Rotorabschnitte (12, 13, 14) **durch** das Einstellen der Spannweite der Rollen (2, 4) gewährleistet wird,
b) Fixieren von Tragarmen und motorisierten Rollen (1, 3) gegen einen Tragrahmen der Abstützmaschine (20).

## Revendications

1. Une machine de support (20) pour supporter une première partie de rotor (12) et au moins une seconde partie (13, 14) de rotor, en particulier d'un rotor creux, en position horizontale pendant l'opération de soudage des parties (12, 13, 14) en un ensemble par une machine à souder, **caractérisée en ce qu'**quelle comporte au moins un rouleau - moteur (1) pour supporter la première partie de rotor (12) et au moins un rouleau - moteur (3) pour supporter au moins une seconde partie (13, 14) de rotor tandis que la rotation au moins d'un rouleau - moteur (1) de la première partie de rotor (12) est alignée d'une manière pour permettre la rotation au moins d'un rouleau - moteur (3) au moins d'une seconde partie de rotor (13) de façon que les parties de rotor (12, 13, 14) tournent en rotation d'une vitesse de rotation identique, caractérisée en plus **en ce que** la machine de support (20) est munie d'une pointe (6) de presse hydraulique pour maintenir en rotation l'extrémité libre (16) de la première partie de rotor (12) et pour appuyer la première partie de rotor (12) contre au moins la seconde partie (13, 14) de rotor de sorte que la pointe (6) de la presse hydraulique forme une liaison avec la terre par prise de terre AC/AD.

2. Machine de support (20) selon la revendication 1, **caractérisée en ce que** la machine de support (20) est munie au moins d'un rouleau à rotation libre (2, 4) pour supporter en plus des parties (12, 13) de rotor.

3. Machine de support (20) selon la revendication 1 ou 2, **caractérisée en ce que** la machine de support (20) comporte une pointe fixe (5) pour maintenir en rotation l'extrémité libre (15) de la seconde partie (13, 14) de rotor de sorte que la pointe fixe (5) forme une liaison avec la terre par prise de terre AC/AD.

4. Machine de support (20) selon l'une quelconque des revendications précédentes, **caractérisée en ce que** la machine de support (20) est construite pour porter des parties (12, 13, 14) de rotor jusqu'au poids de 40.000 kg.

5. Machine à souder pour souder la première partie (12) de rotor et au moins la seconde partie (13, 14) de rotor (11), en particulier d'un rotor creux, lequel consiste d'un corps de machine (7), l'unité de soudage stacionnaire arrangée sur le corps de la machine et la machine de support pour supporter des parties (12, 13, 14) de rotor pendant l'opération de soudage, **caractérisée en ce que** la machine de support (20) est construite selon l'une quelconque des revendications précédentes.

6. Machine à souder selon l'une quelconque des revendications précédentes, **caractérisée en ce que** l'unité de soudage stacionnaire comporte une unité de soudage plasmatique et/ou une unité de soudage à l'arc submergé.

7. Méthode de supporter une première partie (12) de rotor et au moins une seconde partie (13, 14) de rotor (11), en particulier d'un rotor creux, pendant le soudage des parties (12, 13, 14) par une machine à souder selon la revendication 5 ou 6 de sorte que la méthode est **caractérisée par** des étapes suivantes:
a) la première partie (12) de rotor et au moins une seconde partie (13, 14) de rotor sont placées sur les rouleaux (1, 2, 3, 4) de la machine de support (20) selon l'une quelconque des revendications 1 à 4,
b) les rouleaux - moteurs (1, 3) tournent en rotation des parties (12, 13, 14) de rotor de façon synchrone pendant le soudage des parties (12, 13, 14) de rotor pour faire un ensemble.

8. Méthode selon la revendication 7, **caractérisée par** des étapes suivantes:
a) les rouleaux à rotation libre (2, 4) sont mis en positions des soudures futures de rotor de la turbine de sorte que la position des rouleaux (2, 4) est placé en plan vertical et un alignement des parties (12, 13, 14) de rotor est assuré par un ajustage de l'écartement des rouleaux (2, 4),
b) des consoles des rouleaux - moteurs (1, 3) sont fixés au cadre de support de la machine de support (20).
